(19) Europäisches Patentamt
European Patent Office
Office européen des brevets

(11) Publication number: **0 155 078**
**B1**

(12) # EUROPEAN PATENT SPECIFICATION

(45) Date of publication of patent specification: 22.03.89

(51) Int. Cl.$^4$: C 08 G 59/50

(21) Application number: 85300717.7

(22) Date of filing: 01.02.85

(54) **Epoxy resin containing a combination of high and low molecular weight polyoxyalkylene polyamine curing agents.**

(30) Priority: 15.02.84 US 580482

(43) Date of publication of application:
18.09.85 Bulletin 85/38

(45) Publication of the grant of the patent:
22.03.89 Bulletin 89/12

(84) Designated Contracting States:
BE DE FR GB IT NL SE

(58) References cited:
EP-A-0 070 550

(73) Proprietor: TEXACO DEVELOPMENT CORPORATION
2000 Westchester Avenue
White Plains New York 10650 (US)

(72) Inventor: Waddill, Harold George
7108 Geneva Circle
Austin Texas 78723 (US)
Inventor: Dominguez, Richard Joseph Gilbert
3107 Canter Lane
Austin TExas 78759 (US)

(74) Representative: Burnside, Michael et al
Urquhart-Dykes & Lord 91 Wimpole Street
London W1M 8AH (GB)

EP 0 155 078 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to curable epoxy resins having increased adhesive strength; and more particularly to epoxy resins cured with a combination of certain high molecular weight and low molecular weight polyoxyalkylene polyamines.

The adhesion and other properties of epoxy resins have been enhanced by the addition of certain additives. US—A—3 645 969 and 3 306 809, and GB—A—2 031 431 disclose epoxy resin formulations containing various combinations of polyoxyalkylene polyamines. It is believed that the particular combination employed in this invention is different from and not obvious in view of the materials described in those documents.

This invention provides epoxy resin compositions having superior adhesion properties which are the cured reaction products of a vicinal polyepoxide having an epoxide equivalency of greater than 1.8 and a curing agent which is a combination of polyamines comprising 15 weight % or less of a polyoxyalkylene polyamine having an amine functionality greater than 2 and a molecular weight of 5,000 or more, and 85 weight % or more of a polyoxyalkylene polyamine with a functionality of 2 or more and a molecular weight of 200 to 450.

According to the present invention, mixtures of a polyepoxide; a curing agent which is a combination of 85 weight % or more, preferably 90 weight % or more, of certain polyoxyalkylene polyamines having a molecular weight of less than 450 and 5 to 15 weight %, preferably 10 weight % or less, of a polyoxyalkylene polyamine having more than two primary amine functions and a molecular weight of at least 5,000 and, optionally, an accelerator and other standard ingredients, can be cured in accordance with conventional methods to provide cured epoxy resins having unexpectedly improved adhesive strength.

The amine-terminated polyether resins (polyoxyalkylene polyamines) useful in this invention are polyether resins made from an appropriate initiator, to which lower alkylene oxides, such as ethylene oxide, propylene oxide, butylene oxide or mixtures thereof, are added, with the resulting hydroxyl terminated polyol then being aminated. When two or more oxides are used, they may be present as random mixtures or as blocks of one or the other polyether. In the amination step it is highly desirable that substantially all the terminal hydroxyl groups in the polyol be secondary hydroxyl groups, for ease of amination. Normally, the amination step does not completely replace all of the hydroxyl groups, although the majority of hydroxyl groups are replaced by amine groups. Therefore, the amine terminated polyether resins useful in this invention have more than 50% of their active hydrogens in the form of amine hydrogens. If ethylene oxide is used, it is desirable to cap the hydroxyl terminated polyol with a small amount of higher alkylene oxide, to ensure that substantially all the terminal hydroxyl groups are secondary hydroxyl groups. The polyols so prepared are then reductively aminated as outlined, for example in US—A—3 654 370 and other prior art techniques.

According to one embodiment there is provided a curable epoxy resin containing a glycidyl ether of 4,4' - isopropylidene bisphenol and an amount of a combination of polyamines, the combination comprising 5 to 15 weight % of a polyoxyalkylene polyamine having an amine functionality greater than 2 and a molecular weight of 5,000 or more, and 85 weight % or more of a polyoxyalkylene polyamine having a functionality of 2 or more and a molecular weight of 200 to 450.

Preferably, the high molecular weight polyoxyalkylene polyamines have the structure

$$[H_2N-(\underset{\displaystyle Y}{\underset{|}{C}}H\underset{\displaystyle H}{\underset{|}{C}}HO)_n]_r-Z$$

wherein Y is hydrogen, methyl or ethyl, Z is a hydrocarbon radical having 3 to 5 carbon atoms, *n* is a number sufficient to impart a molecular weight of 5,000 or more to the molecule, and *r* is a number greater than 2.

Especially preferred is a high molecular weight polyoxyalkylene polyamine having the general structure:

$$\begin{array}{l} CH_2[OCH_2CH(CH_3)]_xNH_2 \\ | \\ CH[OCH_2CH(CH_3)]_yNH_2 \\ | \\ CH_2[OCH_2CH(CH_3)]_zNH_2 \end{array}$$

wherein x+y+z are numbers having a total such that the molecular weight of said polyoxyalkylene polyamine is 5,000 or more.

Preferably, the low molecular weight polyoxyalkylene polyamines have the structure

$$[H_2N-(\underset{\displaystyle X}{\underset{|}{C}}H\underset{\displaystyle H}{\underset{|}{C}}HO)_m]_p-Z'$$

wherein X is hydrogen, methyl or ethyl, Z' is a hydrocarbon radical having 2 to 5 carbon atoms, *m* is a number sufficient to impart a molecular weight of 200 to 450 to the molecule, and *p* is at least 2.

Especially preferred are low molecular weight polyoxyalkylene polyamines having the general structure

$$H_2NCH(CH_3)CH_2[OCH_2CH(CH_3)]_wNH_2$$

wherein *w* is a number such that the molecular weight of said polyoxyalkylene polyamine is from 200 to 300, or having the general structure

$$CH_3-C(CH_2[OCH_2CH(CH_3)]_aNH_2)(CH_2[OCH_2CH(CH_3)]_bNH_2)(CH_2[OCH_2CH(CH_3)]_cNH_2)$$

wherein a+b+c are finite numbers having a total such that the molecular weight of said polyoxyalkylene polyamine is about 400.

Generally, the amine curable vicinal polyepoxide containing compositions are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted if desired with other substituents besides the epoxy groups; e.g., hydroxyl groups, ether radicals or aromatic halogen atoms.

Preferred polyepoxides are those of glycidyl ethers prepared by epoxidizing the corresponding allyl ethers, or reacting, by known procedures, a molar excess of epichlorohydrin and an aromatic polyhydroxy compound; e.g., isopropylidene bisphenol, a novolak or resorcinol. The epoxy derivatives of methylene or isopropylidene bisphenols are especially preferred.

A widely used class of polyepoxides which can be used according to the instant invention includes the resinous epoxy polyethers obtained by reacting an epihalohydrin, such as epichlorohydrin, with either a polyhydric phenol or a polyhydric alcohol. An illustrative, but by no means exhaustive, list of suitable dihydric phenols includes 4,4' - isopropylidene bisphenol, 2,4' - dihydroxydiphenylethylmethane, 3,3' - dihydroxydiphenyldiethylmethane, 3,4' - dihydroxydiphenylmethylpropylmethane, 2,3' - dihydroxydiphenylethylphenylmethane, 4,4' - dihydroxydiphenylpropylphenylmethane, 4,4' - dihydroxydiphenylbutylphenylmethane, 2,2' - dihydroxydiphenylditolylmethane, and 4,4' - dihydroxydiphenyltolylmethylmethane. Other polyhydric phenols which may also be co-reacted with an epihalohydrin to provide these epoxy polyethers are such compounds as resorcinol, hydroquinone, and substituted hydroquinones; e.g., methylhydroquinone.

Among the polyhydric alcohols which can be co-reacted with an epihalohydrin to provide these resinous epoxy polyethers are such compounds as ethylene glycol, propylene glycols, butylene glycols, pentane diols, bis - (4 - hydroxycyclohexyl)dimethylmethane, 1,4 - dimethylolbenzene, glycerol, 1,2,6 - hexanetriol, trimethylolpropane, mannitol, sorbitol, erythritol, pentaerythritol, their dimers, trimers and higher polymers; e.g., polyethylene glycols, polypropylene glycols, triglycerol, dipentaerythritol, polyallyl alcohol, polyhydric thioethers, such as 2,2',3,3' - tetrahydroxydipropylsulfide, mercapto alcohols such as monothioglycerol and dithioglycerol, polyhydric alcohol partial esters, such as monostearin, and pentaerythritol monoacetate, and halogenated polyhydric alcohols such as the monochlorohydrins of glycerol, sorbitol and pentaerythritol.

Another class of polymeric polyepoxides which can be amine cured and used in accordance with the present invention includes the epoxy novolak resins obtained by reacting, preferably in the presence of a basic catalyst; e.g., sodium or potassium hydroxide, an epihalohydrin, such as epichlorohydrin, with the resinous condensate of an aldehyde; e.g., formaldehyde, and either a monohydric phenol; e.g., phenol itself, or a polyhydric phenol. Further details concerning the nature and preparation of these epoxy novolak resins can be obtained in Lee, H. and Neville, K., *Handbook of Epoxy Resins,* McGraw-Hill Book Co., New York, 1967.

Other polyepoxides known to those skilled in the art may be useful in this invention.

Optionally, the epoxy resin formulations of the instant invention can include an "accelerator" to speed the amine cure of the epoxy resin, especially at ambient temperatures. In several applications, such acceleration is beneficial, especially when an epoxy resin is used as an adhesive in a flammable environment, thus making curing at elevated temperature incovenient or even hazardous. Lee, H. and Neville, K., *Handbook of Epoxy Resins,* pp. 7—14 describes the use of certain amine-containing compounds as epoxy curing agent-accelerators.

Many accelerators are known in the art which can be used in accordance with the present invention. Examples include salts of phenols or salicylic acid, amine salts of fatty acids, such as those disclosed in US—A—2 681 901, and tertiary amines, such as those disclosed in US—A—2 839 480. Preferred accelerators for use in accordance with the present invention are disclosed in US—A—3 875 072 and 4 195 153.

It will further be realized that various conventionally employed additives can be mixed with the polyepoxides containing composition of the present invention before final cure. For example, in certain instances it may be desired to add minor amounts of other polyalkylene-amine co-catalysts as herein described, or hardeners, along with various other accelerators and curing agent systems well known in the art.

Additionally, conventional pigments, dyes, fillers, and flame retarding agents which are compatible; and natural or synthetic resins can be added.

Furthermore, although not preferred, known solvents for polyepoxides materials such as toluene, benzene, xylene, dioxane, and ethylene glycol monomethyl ether can be used. The polyepoxide resins containing the additives used according to the present invention can be used in any of the above-mentioned applications for which polyepoxides are customarily used. One outstanding feature of the compositions according to the present invention resides in the fact that they are opaque after curing, and give a smooth, white lustrous surface, which may be of particular benefit for certain moulding and casting operations. The compositions of the present invention can be used as impregnants, surface coatings, encapsulating compositions, laminants and, particularly and most importantly, as adhesives for bonding metallic elements or structures permanently together.

The following Examples illustrate the nature of the instant invention but are not intended to be limitative thereof. The amounts used are parts by weight, the nature of the various materials is indicated in the Glossary following the Examples.

Examples outside the scope of the claims are indicated *.

Example 1

A polyoxyalkylene polyamine above a certain molecular weight is necessary in order to develop enhanced adhesive properties when used in combination with a polyoxyalkylene polyamine having a molecular weight of less than 450. These polyglycol amines of molecular weight less than 4,000 apparently are soluble in epoxy systems containing the low molecular weight polyoxyalkylene polyamine and, therefore, do not undergo phase-separation. Phase-separation is apparently necessary for enhancement of adhesion properties. This may be shown as follows:

| Formulation | A* | B* | C* | D* | E* | F* |
|---|---|---|---|---|---|---|
| Epoxy resin[1] | 100 | 100 | 100 | 100 | 100 | 100 |
| JEFFAMINE D-230 | 32 | 31.2 | 30.9 | 30.5 | 29.9 | 29.1 |
| JEFFAMINE D-2000 | — | 1.5 | 3.5 | 7.6 | 12.8 | 19.4 |
| Accelerator 399 | 10 | 10 | 10 | 10 | 10 | 10 |
| Adhesive properties, cured 7 days, at 25°C | | | | | | |
| Tensile shear strength, MPa | 6.21 | 7.58 | 8.96 | 8.27 | 12.41 | 17.93 |
| T-peel strength, N/m | 3.85 | 4.90 | 3.50 | 2.10 | 3.33 | 4.90 |
| Appearance | Clear; no phase separation | | | | | |

| Formulation | G* | H* | I* | J* |
|---|---|---|---|---|
| Epoxy resin | 100 | 100 | 100 | 100 |
| JEFFAMINE D-230 | 31.2 | 31.0 | 30.5 | 29.9 |
| JEFFAMINE T-3000 | 1.6 | 3.4 | 7.6 | 12.8 |
| Accelerator 399 | 10 | 10 | 10 | 10 |
| Adhesive properties, cured 7 days at 25°C | | | | |
| Tensile shear strength, MPA | 7.58 | 6.21 | 9.31 | 11.03 |
| T-peel strength, N/m | 4.73 | 5.43 | 4.38 | 5.60 |
| Appearance | Clear; no phase separation | | | |

[1]A diglycidyl ether of Bisphenol A of EEW~185. This resin is used in all formulations in this application.

Example 1 (contd.)

| Formulation | K* | L* | M* | N* |
|---|---|---|---|---|
| Epoxy resin | 100 | 100 | 100 | 100 |
| JEFFAMINE D-230 | 31.2 | 31.1 | 30.9 | 30.5 |
| JEFFAMINE D-4000 | 1.7 | 3.5 | 7.7 | 13.1 |
| Accelerator 399 | 10 | 10 | 10 | 10 |
| Adhesive properties, cured 7 days at 25°C | | | | |
| Tensile shear strength, MPa | 6.89 | 7.58 | 11.72 | 22.06 |
| T-peel strength, N/m | 4.73 | 3.33 | 5.78 | 11.56 |
| Appearance | Clear; no phase separation | | Partial phase sep. cloudiness | Dense whitening; phase separation |

| Formulation | O | P | Q* | R* | S* |
|---|---|---|---|---|---|
| Epoxy resin | 100 | 100 | 100 | 100 | 100 |
| JEFFAMINE D-230 | 31.3 | 31.2 | 30.9 | 30.6 | 30.3 |
| JEFFAMINE T-5000 | 1.6 | 3.4 | 7.8 | 13.2 | 20.1 |
| Accelerator 399 | 10 | 10 | 10 | 10 | 10 |
| Adhesive properties, cured, 7 days at 25°C | | | | | |
| Tensile shear strength, MPa | 9.65 | 14.48 | 24.13 | 23.44 | 22.75 |
| T-peel strength, N/m | 1.58 | 4.03 | 5.95 | 16.81 | 24.34 |
| Appearance | Partial phase separation; cloudiness | Dense whitening; phase separation | | | |

| Formulation | T | U | V* | W* |
|---|---|---|---|---|
| Epoxy resin | 100 | 100 | 100 | 100 |
| JEFFAMINE D-230 | 31.3 | 31.2 | 31.0 | 30.8 |
| Amin, THANOL G-6500 | 1.6 | 3.5 | 7.8 | 13.2 |
| Adhesive properties, cured, 7 days at 25°C | | | | |
| Tensile shear strength, MPa | 8.27 | 15.51 | 17.24 | 19.65 |
| T-peel strength, N/m | 1.93 | 3.50 | 10.86 | 14.01 |
| Appearance | —Dense whitening; phase separation— | | | |

Example 2
Curing with JEFFAMINE D-230 at 2 hrs at 80°C and then 3 hrs at 125°C

| Formulations | A* | B* | C* | D* | E* | F* | G | H* | J* |
|---|---|---|---|---|---|---|---|---|---|
| EPON 828 | 100 | 100 | 100 | 100 | 100 | 100 | 100 | 100 | 100 |
| JEFFAMINE D-230 | 32.0 | 31.2 | 30.9 | 30.5 | 29.9 | 32.0 | 31.1 | 30.9 | 30.6 |
| JEFFAMINE D-2000 | — | 1.5 | 3.5 | 7.6 | 12.8 | | | | |
| wt.% | 0.0 | 1.1 | 2.6 | 5.5 | 9.0 | | | | |
| JEFFAMINE T-5000 | | | | | | — | 3.5 | 7.8 | 13.2 |
| wt.% | | | | | | — | 2.6 | 5.6 | 9.2 |

Curing with JEFFAMINE D-230 at an elevated temperature

| | T-peel strength (N/m) at concentration level* (wt.%) of additive | | | | | | |
|---|---|---|---|---|---|---|---|
| Additive | 0.0 | 1.1 | 2.6 | 5.5 | 5.6 | 9.0 | 9.2 |
| JEFFAMINE D-2000 | 2.63 | 4.55 | 3.85 | 4.20 | — | 4.20 | — |
| JEFFAMINE T-5000 | 2.63 | — | 10.16 | — | 18.04 | — | 24.69 |

| | Tensile shear strength (MPa) at concentration level (wt.%) of additive | | | | | | |
|---|---|---|---|---|---|---|---|
| Additive | 0.0 | 1.1 | 2.6 | 5.5 | 5.6 | 9.0 | 9.2 |
| JEFFAMINE D-2000 | 26.55 | 28.61 | 28.96 | 25.51 | — | 30.34 | — |
| JEFFAMINE T-5000 | 26.55 | — | 31.03 | — | 29.65 | — | 27.58 |

*Wt.% is based on total system.

JEFFAMINE T-5000 is considerably more effective than JEFFAMINE D-2000 in enhancement of adhesion properties, when added in small amounts to an epoxy system cured with JEFFAMINE D-230.

Example 3

| Formulation | A* | B* | C* | D* | E* | F* | G* | H* | J* | K* | L* | M* | N |
|---|---|---|---|---|---|---|---|---|---|---|---|---|---|
| EPON 828 | 100 | 100 | 100 | 100 | 100 | 100 | 100 | 100 | 100 | 100 | 100 | 100 | 100 |
| JEFFAMINE D-230 | 32.0 | 31.2 | 31.0 | 30.5 | 29.9 | 29.1 | 32.0 | 31.2 | 31.0 | 30.5 | 29.9 | 32.0 | 31.3 |
| JEFFAMINE D-2000 | — | 1.6<br>1.6% | 3.5<br>2.4% | 7.8<br>5.2% | 13.1<br>8.5% | 19.9<br>12.5% | | | | | | | |
| JEFFAMINE T-3000 | | | | | | | — | 1.6<br>1.1% | 3.5<br>2.4% | 7.8<br>5.2% | 13.1<br>8.5% | | |
| JEFFAMINE T-5000 | | | | | | | | | | | | — | 1.6<br>1.1% |
| Amin. THANOL G-6500 | | | | | | | | | | | | | |
| Accelerator 399 | 10 | 10 | 10 | 10 | 10 | 10 | 10 | 10 | 10 | 10 | 10 | 10 | 10 |

Example 3 (Cont.)

| Formulation | P | Q* | R* | S* | T* | U | V | W* | X* | Y* |
|---|---|---|---|---|---|---|---|---|---|---|
| EPON 828 | 100 | 100 | 100 | 100 | 100 | 100 | 100 | 100 | 100 | 100 |
| JEFFAMINE D-230 | 31.2 | 30.9 | 30.6 | 30.1 | 32.0 | 31.3 | 31.2 | 31.0 | 30.8 | 30.5 |
| JEFFAMINE D-2000 | | | | | | | | | | |
| JEFFAMINE T-3000 | | | | | | | | | | |
| JEFFAMINE T-5000 | 3.4<br>2.4% | 7.8<br>5.2% | 13.2<br>8.5% | 20.1<br>12.5% | | | | | | |
| Amin. THANOL G-6500 | | | | | — | 1.6<br>1.1% | 3.4<br>2.4% | 7.7<br>5.2% | 13.1<br>8.5% | 20.0<br>12.5% |
| Accelerator 399 | 10 | 10 | 10 | 10 | 10 | 10 | 10 | 10 | 10 | 10 |

Rheometric impact properties on curing with JEFFAMINE D-230: ambient temperature with accelerator

| Additive | Total energy (E) in newtons at concentration level (wt.%) of additive | | | | | |
|---|---|---|---|---|---|---|
| | 0 | 1.1 | 2.4 | 5.2 | 8.5 | 12.5 |
| JEFFAMINE D-2000 | 0.90 | 0.225 | 0.45 | 0.45 | 11.915 | 32.15 |
| JEFFAMINE T-3000 | 0.90 | 1.125 | 1.35 | 0.675 | 19.109 | — |
| JEFFAMINE T-5000 | 0.90 | 0.90 | 1.80 | 0.90 | 4.95 | 29.25 |
| Amine G-6500 | 0.90 | 2.025 | 0.45 | 2.025 | 1.35 | 3.60 |

Results were somewhat erratic but indicate improved impact properties with low concentrations of higher molecular weight polyoxyalkylene polyamines.

Examples 4 to 7 demonstrate the applicability of the invention to other low molecular weight polypoxyalkylene polyamines.

Example 4

| Formulation | 70A* | 70B* | 70C* | 70D* | 70E* |
|---|---|---|---|---|---|
| EPON 828 | 100 | 100 | 100 | 100 | 100 |
| JEFFAMINE T-403 | 42.7 | 42.5 | 42.0 | 41.6 | 40.8 |
| JEFFAMINE D-2000 | — | 1.4(1%) | 4.4(3%) | 7.5(5%) | 12.2(8%) |
| Adhesive properties[1] | | | | | |
| Tensile shear strength, MPa | 26.20 | 25.51 | 25.86 | 28.96 | 29.65 |
| T-peel strength, N/m | 3.85 | 4.03 | 4.20 | 3.85 | 4.73 |

[1]Cured 1 hour at 125°C.

Example 5

| Formulation | 70A* | 66C | 66D* | 47C* |
|---|---|---|---|---|
| EPON 828 | 100 | 100 | 100 | 100 |
| JEFFAMINE T-403 | 42.7 | 42.4 | 41.9 | 41.4 |
| JEFFAMINE T-5000 | — | 4.7(3.2%) | 10.5(6.9%) | 17.7(11.1%) |
| Adhesive properties | | | | |
| Tensile shear strength, MPa | 26.20 | 28.96 | 28.96 | 24.82 |
| T-peel strength, N/m | 3.85 | 19.61 | 10.68 | 19.96 |

Example 6

| Formulation | 68A* | 69A | 48A* | 48B* |
|---|---|---|---|---|
| EPON 828 | 100 | 100 | 100 | 100 |
| JEFFAMINE D-400 | 56.8 | 56.2 | 55.4 | 54.4 |
| JEFFAMINE T-5000 | — | 6.2(3.8%) | 13.9(8.2%) | 23.4(13.2%) |
| Adhesive properties[1] | | | | |
| Tensile shear strength, MPa | 20.68 | 25.51 | 17.93 | 15.86 |
| T-peel strength, N/m | 5.95 | 5.60 | 25.92 | 25.74 |

[1]Cured 1 hour at 125°C.

Example 7

| Formulation | 68A* | 68B* | 68C* | 68D* | 68E* |
|---|---|---|---|---|---|
| EPON 828 | 100 | 100 | 100 | 100 | 100 |
| JEFFAMINE D-400 | 56.8 | 56.4 | 55.8 | 55.1 | 54.0 |
| JEFFAMINE D-2000 | — | 1.6(1%) | 4.8(3%) | 8.1(5%) | 13.4(8%) |
| Adhesive properties[1] | | | | | |
| Tensile shear strength, MPa | 27.58 | 27.92 | 26.89 | 20.00 | 17.93 |
| T-peel strength, N/m | 5.95 | 5.08 | 5.60 | 6.30 | 7.88 |

[1]Cured 1 hour at 125°C.

Glossary

| | |
|---|---|
| Accelerator 399 | — a mixture of aminoethylpiperazine (5%), piperazine (25%) and triethanolamine (70%). A product of Texaco Chemical Co. |
| JEFFAMINE D-2000 | — a polyoxyalkylene diamine of about 2000 molecular weight. A product of Texaco Chemical Co. |
| JEFFAMINE T-3000 | — a polyoxyalkylene triamine of about 3000 molecular weight. A product of Texaco Chemical Co. |
| JEFFAMINE D-4000 | — a polyoxyalkylene diamine of about 4000 molecular weight. A product of Texaco Chemical Co. |
| JEFFAMINE T-5000 | — a polyoxyalkylene triamine of about 5000 molecular weight. A product of Texaco Chemical Co. |
| Aminated G-6500 | — a polyoxyalkylene triamine of about 6500 molecular weight. A product of Texaco Chemical Co. |
| JEFFAMINE D-230 | — a polyoxyalkylene diamine of about 230 molecular weight. A product of Texaco Chemical Co. |
| JEFFAMINE D-400 | — a polyoxyalkylene diamine of about 400 molecular weight. A product of Texaco Chemical Co. |
| JEFFAMINE T-403 | — a polyoxyalkylene triamine of about 400 molecular weight. A product of Texaco Chemical Co. |
| EPON 828 | — Liquid epoxy resin—a diglycidyl ether of Bisphenol A of EEW~185. EEW is epoxy equivalent weight. |

**Claims**

1. A curable epoxy resin composition which comprises a vicinal polyepoxide having an epoxide equivalency of greater than 1.8 and a polyamine curing agent, characterized in that the curing agent is a combination comprising:

a) 5 to 15 wt.% of a first polyoxyalkylene polyamine having an amine functionality greater than 2 and a molecular weight of 5,000 or more, and

b) 85 wt.% or more of a second polyoxyalkylene polyamine of functionality 2 or more having a molecular weight of 200 to 450.

2. A composition according to Claim 1, characterized in that the first polyoxyalkylene polyamine has the structure

$$[H_2N-(\underset{Y}{C}H\underset{H}{C}HO)_n]_r-Z$$

where Y is hydrogen, methyl or ethyl, Z is a hydrocarbon radical having 3 to 5 carbon atoms, *n* is a number sufficient to impart a molecular weight of 5,000 or more to the molecule, and r is a number greater than 2.

3. A composition according to Claim 1, characterized in that the first polyoxyalkylene polyamine has the general structure

$$CH_2[OCH_2CH(CH_3)]_xNH_2$$
$$|$$
$$CH[OCH_2CH(CH_3)]_yNH_2$$
$$|$$
$$CH_2[OCH_2CH(CH_3)]_zNH_2$$

wherein x+y+z are numbers having a total such that the molecular weight of said polyoxyalkylene polyamine is 5,000 or more.

4. A composition according to any preceding claim, characterized in that the second polyoxyalkylene polyamine has the structure

$$[H_2N-(\underset{X}{C}H\underset{H}{C}HO)_m]_p-Z'$$

where X is hydrogen, methyl or ethyl, Z' is a hydrocarbon radical having 2 to 5 carbon atoms, *m* is a number sufficient to impart a molecular weight of 200 to 450 to the molecule and p is at least 2.

5. A composition according to Claim 4, characterized in that the second polyoxyalkylene polyamine has the general structures

$$H_2NCH(CH_3)CH_2[OCH_2CH(CH_3)]_wNH_2$$

wherein w is a number such that the molecular weight of said polyoxyalkylene polyamine is from 200 to 300.

6. A composition according to Claim 4, characterized in that the second polyoxyalkylene polyamine has the general structure

$$CH_2[OCH_2CH(CH_3)]_aNH_2$$
$$|$$
$$CH_3-CCH_2[OCH_2CH(CH_3)]_bNH_2$$
$$|$$
$$CH_2[OCH_2CH(CH_3)]_cNH_2$$

wherein a+b+c are numbers having a total such that the molecular weight of said polyoxyalkylene polyamine is about 400.

**Patentansprüche**

1. Härtbare Epoxidharzzusammensetzung, umfassend ein vicinales Polyepoxid mit einer Epoxid-Äquivalenz größer als 1,8 und einen Polyamin-Härter, dadurch gekennzeichnet, daß der Härter eine Kombination ist, die umfaßt:

a) 5—15 Gew.-% eines ersten Polyoxyalkylenpolyamins mit einer Aminfunktionalität größer als 2 und einem Molekulargewicht von 5.000 oder mehr, und

b) 85 Gew.-% oder mehr eines zweiten Polyoxyalkylenpolyamins mit einer Funktionalität von 2 oder mehr und einem Molekulargewicht von 200—450.

2. Zusammensetzung nach Anspruch 1, dadurch gekennzeichnet, daß das erste Polyoxyalkylenpolyamin die Struktur hat:

$$[H_2N-(\underset{Y}{C}H\underset{H}{C}HO)_n]_r-Z$$

mit

Y=Wasserstoff, Methyl oder Ethyl,

Z=ein Kohlenwasserstoffrest mit 3—5 Kohlenstoffatomen,

n=eine Zahl, die ausreicht, um dem Molekül ein Molekulargewicht von 5.000 oder mehr zu verleihen, und

r=eine Zahl größer als 2.

3. Zusammensetzung nach Anspruch 1, dadurch gekennzeichnet, daß das erste Polyoxyalkylenpolyamin die allgemeine Struktur hat:

$$\begin{array}{l} CH_2[OCH_2CH(CH_3)]_xNH_2 \\ | \\ CH[OCH_2CH(CH_3)]_yNH_2 \\ | \\ CH_2[OCH_2CH(CH_3)]_zNH_2 \end{array}$$

mit

x+y+z=Zahlen, die eine solche Summe ergeben, daß das Molekulargewicht des Polyoxyalkylenpolyamins 5.000 oder mehr beträgt.

4. Zusammensetzung nach einem der vorhergehenden Ansprüche, dadurch gekennzeichnet, daß das zweite Polyoxyalkylenpolyamin die Struktur hat:

$$[H_2N\!-\!(\underset{X}{\underset{|}{C}}H\underset{H}{\underset{|}{C}}HO)_m]_p\!-\!Z'$$

mit

X=Wasserstoff, Methyl oder Ethyl,

Z'=ein Kohlenwasserstoffrest mit 2—5 Kohlenstoffatomen,

*m*=eine Zahl, die ausreicht, um dem Molekül ein Molekulargewicht von 200—450 zu verleihen, und

p=wenigstens 2 ist.

5. Zusammensetzung nach Anspruch 4, dadurch gekennzeichnet, daß das zweite Polyoxyalkylenpolyamin die allgemeine Struktur hat:

$$H_2NCH(CH_3)CH_2[OCH_2CH(CH_3)]_wNH_2$$

mit

w=eine solche Zahl, daß das Molekulargewicht des Polyoxyalkylenpolyamins zwischen 200 und 300 liegt.

6. Zusammensetzung nach Anspruch 4, dadurch gekennzeichnet, daß das zweite Polyoxyalkylenpolyamin die allgemeine Struktur hat:

$$\begin{array}{ll} & CH_2[OCH_2CH(CH_3)]_aNH_2 \\ & | \\ CH_3\!-\! & CCH_2[OCH_2CH(CH_3)]_bNH_2 \\ & | \\ & CH_2[OCH_2CH(CH_3)]_cNH_2 \end{array}$$

mit

a+b+c=Zahlen, die eine solche Summe ergeben, daß das Molekulargewicht des Polyoxyalkylenpolyamins ca. 400 beträgt.

**Revendications**

1. Composition de résine époxy durcissable qui comprend un polyépoxyde vicinal ayant un équivalent d'époxyde supérieur à 1,8 et un agent de durcissement de polyamine, caractérisé en ce que l'agent de durcissement est une combinaison comprenant:

a) 5 à 15% en poids d'une première polyoxyalkène polyamine ayant une fonctionnalité amine supérieure à 2 et une masse moléculaire de 5000 ou davantage, et

b) 85% en poids ou davantage d'une seconde polyoxyalkylène polyamine d'une fonctionnalité de 2 ou davantage ayant une masse moléculaire de 200 à 450.

2. Composition suivant la revendication 1, caractérisée en ce que la première polyoxyalkène polyamine répond à la formule

$$[H_2N\!-\!(\underset{Y}{\underset{|}{C}}H\underset{H}{\underset{|}{C}}HO)_n]_r\!-\!Z$$

dans laquelle Y est un atome d'hydrogène, un groupe méthyle ou éthyle, Z est un radical hydrocarboné en $C_3$ à $C_5$, n est un nombre suffisant pour conférer une masse moléculaire de 5000 ou davantage à la molécule et r est un nombre supérieur à 2.

3. Composition suivant la revendication 1, caractérisée en ce que la première polyoxyalkène polyamine répond à la formule générale

$$\begin{array}{l} CH_2[OCH_2CH(CH_3)]_xNH_2 \\ | \\ CH[OCH_2CH(CH_3)]_yNH_2 \\ | \\ CH_2[OCH_2CH(CH_3)]_zNH_2 \end{array}$$

dans laquelle x+y+z sont des nombres dont le total est tel que la masse moléculaire de cette polyoxyalkène polyamine est de 5000 ou davantage.

4. Composition suivant l'une quelconque des revendications précédentes, caractérisée en ce que la seconde polyoxyalkylène polyamine réponde à la formule

$$[H_2N—(\underset{X}{\underset{|}{C}}H\underset{H}{\underset{|}{C}}HO)_m]_p—Z'$$

dans laquelle X est un atome d'hydrogène, un groupe méthyle ou éthyle, Z' est un radical hydrocarboné en $C_2$ à $C_5$, m est un nombre suffisant pour conférer une masse moléculaire de 200 à 450 à la molécule et p est au moins égal à 2.

5. Composition suivant la revendication 4, caractérisée en ce que la seconde polyoxyalkylène polyamine répond à la formule générale

$$H_2NCH(CH_3)CH_2[OCH_2CH(CH_3)]_wNH_2$$

dans laquelle w est un nombre tel que la masse moléculaire de cette polyoxyalkylène polyamine soit de 200 à 300.

6. Composition suivant la revendication 4, caractérisée en ce que la seconde polyoxyalkylène polyamine répond à la formule générale

$$\begin{array}{ll} & CH_2[OCH_2CH(CH_3)]_aNH_2 \\ & | \\ CH_3— & CCH_2[OCH_2CH(CH_3)]_bNH_2 \\ & | \\ & CH_2[OCH_2CH(CH_3)]_cNH_2 \end{array}$$

dans laquelle a+b+c sont des nombres dont le total est tel que la masse moléculaire de cette polyoxyalkylène polyamine soit d'environ 400.